# EUROPEAN PATENT SPECIFICATION

(11) **EP 2 044 644 B1**
(45) Date of publication and mention of the grant of the patent: **07.11.2012**
(21) Application number: 07733427.4
(22) Date of filing: 29.06.2007
(51) Int. Cl.: H01M 8/04, H01M 8/06, H01M 8/12

(54) **STEAM REFORMING METHOD FOR FUEL CELLS**
DAMPFREFORMIERUNGSVERFAHREN FÜR BRENNSTOFFZELLEN
PROCÉDÉ DE REFORMAGE À LA VAPEUR POUR PILES À COMBUSTIBLE

(30) Priority: 29.06.2006 GB 0612966; 05.07.2006 US 818324 P
(43) Date of publication of application: 08.04.2009
(73) Proprietor: Ceres Intellectual Property Company Limited, West Sussex RH13 5PX (GB)
(72) Inventor: SCHMIDT, Martin, West Sussex RH13 5 PX (GB); LEAH, Robert, West Sussex RH13 5PX (GB); DEVRIENDT, James, West Sussex RH13 5 PX (GB); EL KOURY, Karim, West Sussex RH13 5 PX (GB); HARRINGTON, Matthew, West Sussex RH13 5 PX (GB)
(74) Representative: Robertson, James Alexander
(86) International application number: PCT/GB2007/002451
(87) International publication number: WO 2008/001119

(56) References cited:
- EP-A- 1 160 193
- WO-A-02/05363
- WO-A-2006/073150
- US-A1- 2005 164 051
- US-B1- 6 383 468

## Description

The invention relates to steam reforming for solid oxide fuel cells (SOFCs).

The use of hydrocarbon fuels as a fuel basis for fuel cells is known, the fuels such as, for example, natural gas, LPG, butane, propane, town gas, methanol are generally converted to a gas mixture containing hydrogen and carbon dioxide, and in some cases there will also be some other gases present. The known conversion is achieved in one of two principal ways.
1. By steam reforming (SR) at elevated temperature to efficiently produce a mixture of hydrogen and carbon dioxide. This reaction is highly endothermic and if available this heat requirement can be usefully supplied from the waste heat of the fuel cell. The disadvantage is that the reformer and optional heat exchanger required is relatively large and complex and has poor dynamic operating response and start-up characteristics.
2. By partial oxidation reforming (CPOX) to produce a gas containing hydrogen, carbon monoxide and nitrogen. Carbon monoxide is generally undesirable in high concentration and is toxic to some anode catalysts. In addition, the large percentage of nitrogen in the gas stream as a result of using air, dilutes the effective fuel stream entering the fuel cell. It is known that by adding water/steam to the reaction to allow some steam reforming to occur and by doing so reduce the amount of carbon monoxide and boost the amount of hydrogen present via the water gas shift reaction. This has the advantage of compactness, high power output and rapid start-up from cold but has lower energy efficiency, and, unless expensive hydrogen concentration methods / gas clean-up methods are used, it may affect fuel cell performance.

Relevant prior art includes EP0924161, US6383468, and US2004/0047800. EP 0924161 is directed at low-temperature fuel cells, particularly methanol fuel cells, and relates purely to steam reforming of inlet fuel, and makes no disclosure of any interaction between the fuel cell itself and the reforming process for inlet fuel. US6383468 is similarly concerned with low-temperature fuel cells, particularly methanol fuel cells, and teaches that during cold-start of a system, fuel is mixed with oxygen and a catalytic burner operated to heat the system, and in a second phase fuel, oxygen and water are used to partially oxidise the fuel and steam reform the fuel. The requirement for mixing of oxygen and fuel at all times is notable. As for EP0924161, no interaction is provided for between the fuel cell itself and the reforming process for inlet fuel. US 2005 10164051 is directed to a method to start-up a solid oxide fuel cell stack wherein the effluent of a combustor is directed to the cathode side of the fuel cell stack in order to heat the fuel cell stack to operating temperature.

Fuel cell stack assemblies and fuel cell stack system assemblies are well known in the art and include the likes of US 2003/0235743; EP 1434294 / US 2004/0101742; Leah, RT, Brandon, NP, Aguiar, P, Journal of Power Sources, 2005, 145(2): 336-352; WO 02/35628; WO 03/07538; GB 2394114; WO 2004/089848; GB 2400723; GB 2405028; and WO 2005/078843. The contents of each of the references discussed herein, including the references cited therein, are herein incorporated by reference in their entirety.

The present invention provides, in one aspect, a method of reforming hydrocarbon fuel for supply at start-up to a solid oxide fuel cell stack comprising at least one fuel cell, the method comprising:
supplying a steam reformer (SR) defining a catalytic chamber in which is contained a catalyst, with said hydrocarbon fuel and a sub-stoichiometric amount of oxygen by an oxygen containing gas to carry out a partial oxidation (CPOX reaction) of said hydrocarbon fuel on the SR catalyst to produce a gas containing hydrogen,
supplying said gas containing hydrogen to the anode side of said fuel cell stack where it is initially un-reacted in the cold fuel cell stack but giving up some of its heat thereto, and thence to a burner where said gas containing hydrogen is burnt in a supply of oxygen-containing gas; using the hot gas produced to heat up the SR to operating temperature, whereupon
when said SR and fuel cell stack is up to operating temperature, shutting off the supply of oxygen containing gas to said SR and supplying it with water and/or steam to produce a hydrogen-rich fuel, and supplying the hydrogen-rich fuel to the fuel stack anode side of the stack, and in which said supply of oxygen-containing gas to said burner is supplied from the cathode side of said fuel cell stack.

Each fuel cell in the fuel cell stack is a solid oxide fuel cell. Preferably, the at least one fuel cell (SOFC) is an intermediate-temperature solid oxide fuel cell (IT-SOFC). More preferably, the IT-SOFC has an operational temperature in the range 400-650 °C, more preferably450-650 °C.

The sub-stoichiometric amount of oxygen supplied by an oxygen-containing gas is normally supplied from air.

Preferably, the CPOX reaction is carried out in a separate CPOX reformer; the method comprising supplying said CPOX reformer with said hydrocarbon fuel and a sub-stoichiometric amount of oxygen supplied from said oxygen-containing gas to produce a gas containing hydrogen, supplying said gas containing hydrogen to the said fuel cell stack where it is initially un-reacted in the cold fuel cell stack but giving up some of its heat thereto, and thence to a burner where said gas containing hydrogen is burnt in a supply of oxygen-containing gas; using the hot gas produced by this burning to heat up the SR to operating temperature, whereupon when said SR and fuel cell stack is up to operating temperature, shutting down said CPOX reformer and starting up said SR reformer which, supplied with hydrocarbon fuel and water/steam, produces a hydrogen-rich fuel, supplying the hydrogen-rich fuel to the fuel cell stack and supplying waste heat from said fuel cell stack.

Desirably, waste heat from said fuel cell stack is supplied to said SR to maintain the SR's operating temperature.

A supplementary means of heating the SR catalyst at start-up may be provided to assist it in achieving SR catalyst operating temperature.

Advantageously, before the said gas containing hydrogen is supplied to the said fuel cell stack, water and/or steam is mixed with it to shift the produced carbon monoxide element to carbon dioxide and hydrogen.

Preferably, water and/or steam is fed into said CPOX reformer to provide autothermal reforming (ATR).

In one arrangement according to the invention the CPOX reformer is upstream of the steam reformer and the gas containing hydrogen is, before being supplied to said fuel cell stack, passed through the catalytic chamber of said steam reformer. An ATR reformer may be provided in-line between the steam reformer and the fuel cell stack with a steam injection supply between the CPOX and the steam reformer.

In another arrangement according to the invention the SR and CPOX are arranged so that the hydrocarbon fuel flow path passes through the SR before passing through the CPOX. In this arrangement, when the SR becomes operational, the CPOX can be shut down by removing the supply of oxygen gas to the CPOX. In this circumstance the catalyst of the CPOX reformer will have some activity in the water-gas shift reaction to convert carbon monoxide and water to carbon dioxide and hydrogen.

Desirably, oxygen-containing gas is supplied for the CPOX reformer through the steam reformer to oxidise and bum off any potentially deposited carbon or sulphur on the steam reformer catalyst.

In another arrangement according to the invention, the CPOX reformer process and the steam reformer process are arranged in parallel and the output of each (hydrogen containing gas or hydrogen-rich gas respectively) is supplied to said water gas shift reactor before being supplied to the fuel cell stack. Alternatively, if the fuel cell stack is tolerant of carbon monoxide, the water gas shift reactor may be in-line only with the CPOX reformer or the WGS reactor may be omitted completely.

A water gas shift reactor may be provided.

Advantageously, exhaust gas from the heat exchange side of the SR is used to heat a steam generator for the production of steam supplied to the SR and used in the steam reforming process.

At least part of said steam is preferably fed to said CPOX reformer to provide autothermal reforming.

The burner may be a separate gas burner or it may be integrated into the steam reformer.

In a second aspect, a method of supplying reformed hydrocarbon fuel for an at least one solid oxide fuel cell is provided, comprising supplying the at least one fuel cell with hydrocarbon fuel reformed by a steam reformer, and for rapid load transients of the at least one fuel cell when an increase in fuel is required quickly, using a CPOX reformer to rapidly supply additional amounts of reformed fuel to the at least one fuel cell.

In a third aspect,a method of shutting down a supply of reformed hydrocarbon fuel for a fuel cell stack comprising at least one solid oxide fuel cell is provided, the method comprising supplying the at least one fuel cell with hydrocarbon fuel reformed by a steam reformer (SR), and when it is desired to shut down the fuel cell stack, switching the fuel cell supply from reformed hydrocarbon derived from the SR to reformed hydrocarbon fuel derived from a CPOX reformer; thus allowing a low fuel feed rate at a high oxygen to carbon ratio to create a supply to the at least one fuel cell containing mostly nitrogen with a low percentage of carbon monoxide and hydrogen.

The CPOX reformer may be supplied with water/steam to allow some autothermal reforming.

This provides an inert or reducing blanket gas atmosphere on the anode side of the fuel cells and is maintained until the fuel cells have cooled sufficiently that it is safe to admit air to the fuel cells. Operating in this way reduces the chance of the catalyst within the anode structures within the fuel cell stack oxidising and thus inducing mechanical stresses in the fuel cell structures that could lead to structural failure and or fuel cell performance degradation. The advantage of operating the fuel reforming system in this way is that the CPOX reformer can be turned down further than the steam reformer such that only a small fuel flow is required to maintain the reducing atmosphere. This reduces the fuel consumption, improves system efficiency, protects the fuel cell anode and speeds up fuel cell stack shutdown.

In a fourth aspect, a method of providing a supply of reformed hydrocarbon fuel for a fuel cell stack comprising at least one solid oxide fuel cell is provided, the method comprising:
(A) at start up, supplying a steam reformer (SR), with said hydrocarbon fuel and a sub-stoichiometric amount of oxygen (by an oxygen containing gas - normally air) to carry out a partial oxidation (CPOX reaction) of said hydrocarbon fuel on the SR catalyst to produce a gas containing hydrogen, supplying said gas containing hydrogen to the said fuel cell stack where it is initially un-reacted in the cold fuel cell stack but giving up some of its heat thereto, and thence to a burner where said gas containing hydrogen is burnt in a supply of oxygen-containing gas; using the hot gas produced to heat up the SR to operating temperature, whereupon, when said SR and fuel cell stack is up to operating temperature, shutting off the supply of the oxygen containing gas to said SR and supplying it with water and/or steam to produce a hydrogen-rich fuel, and supplying the hydrogen-rich fuel to the fuel cell stack;
(B) during operation of said fuel cell stack supplying the at least one fuel cell with hydrocarbon fuel reformed by said SR, and for rapid load transients of the at least one fuel cell when an increase in fuel is required quickly, using said CPOX reformer to supply additional amounts of reformed fuel; and
(C) at fuel cell stack shut down, switching the supply to the at least one fuel cell of reformed hydrocarbon fuel from said SR to supply derived from a CPOX reformer lowering the fuel feed rate to give a high oxygen to carbon ratio so creating a supply to the at least one fuel cell containing mostly nitrogen with a low percentage of carbon monoxide and hydrogen. Optionally, supplying steam to the CPOX to reduce the temperature of the CPOX to reduce the catalyst temperature and reduce potential coking issues.

Embodiments of the invention will now be described by way of example only and with reference to the accompanying drawings, in which:
- Figure 1: is a schematic process diagram of a first embodiment of the invention;
- Figure 2a: is a schematic process diagram of a second embodiment of the invention;
- Figure 2b: is a schematic process diagram of a third embodiment of the invention;
- Figure 3: is a schematic process diagram of a fourth embodiment of the invention;
- Figure 4a: is a schematic process diagram of a fifth embodiment of the invention;
- Figure 4b: is a schematic process diagram of a sixth embodiment of the invention;
- Figure 5a: is a schematic process diagram of a seventh embodiment of the invention;
- Figure 5b: is a schematic process diagram of an eighth embodiment of the invention;
- Figures 6a, 6b, and 6c: are schematic diagrams of alternative arrangements for the CPOX/ATR reformer;
- Figures 7a, 7b: are schematic process diagrams of further embodiments of the invention; and
- Figure 8: is a schematic process diagram of a further embodiment of the invention.

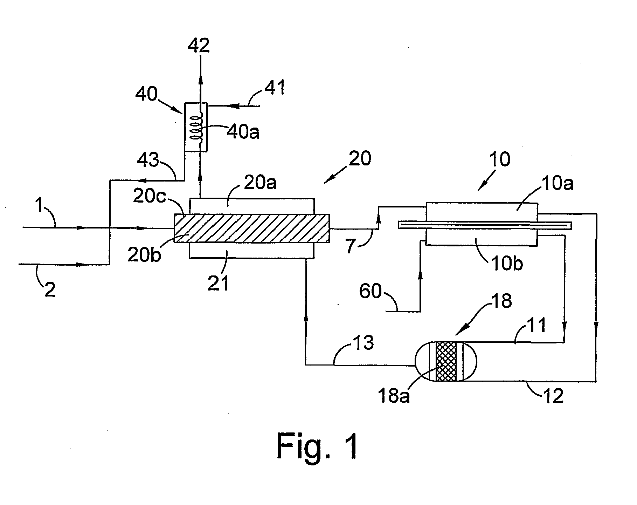

In the first embodiment of Figure 1 there is provided a fuel cell stack 10 having anode 10a and cathode 10b sides, a steam reformer (SR) 20 having a heater section 20a and steam reformer catalyst section 20b, and associated with the SR a steam generator 40. At start-up of the process, the SR, fuel cell stack, ATR, and stream generator are cold i.e. below their normal operating temperature.

Steam generator 40 has water inlet 41, feed 42 to exhaust, and steam outlet feed 43. Fuel cell stack 10 has air feed 60.

The SR 20 fitted with a precious metal catalyst is supplied with hydrocarbon fuel, and air along respective lines 1 and 2 and in this mode as supplied with these inputs acts as a CPOX reformer (there being no steam reforming), the partial oxidation of the fuel taking place on the catalyst. This is advantageous in that the dry gas produced will not cause condensation in the steam reformer 20 or fuel cell stack 10 when they are cold. A supplementary means of heating the SR 20 is required, in this embodiment in the form of an electric cartridge heater 20c (in alternative embodiments, similar device such as a glowplug are used) to bring the SR catalyst up to operating CPOX reaction temperature of >200 degrees Celsius. The reformate, a gas containing hydrogen, from the SR 20 (acting as a 'CPOX), passes via a line 7 to the fuel cell stack anode side 10a. At this point the fuel cell stack 10 is cold and inactive though it does receive some heat from the reformate gas containing hydrogen. The latter passes through initially unreacted via a line 12 to a gas burner 18 ("tail gas burner") where it burns spontaneously assisted by a burner catalyst or a flame burner 18a in a supply of air supplied by a line 11 from the cathode side 10b of the fuel cell stack 10, and the hot gas generated passes via a line 13 to a heat exchange side 21 of steam reformer 20. This combustion heats up the steam reformer 20 and when this and the fuel cell stack 10 and the associated lines are at operating temperature (and above condensation temperatures) the CPOX reaction is shut down by shutting off the supply of air to the SR 20 and the steam reforming reaction is started up by feeding water and/or steam to the SR 20. In this way the SR 20 assumes the full steam reforming function.

Thus, at cold, the SR 20 acts as a CPOX reactor to heat itself and fuel cell stack 10 rapidly to bring the process up to operating temperature, at which point the SR 20 changes over to full steam reforming (with a higher efficiency than CPOX).

The fuel cell stack 10 once in operation produces waste heat which is used by the SR 20 to continue its endothermic reforming reaction. Waste heat from the heat exchanger 21 side of the SR 20 is fed to a heat exchanger 40a of the steam generator 40, the steam produced feeding the SR 20 after (and optionally before) the CPOX reaction is shut off to provide some autothermal reforming. This embodiment of the invention is not so quick typically to start up as those following, but has the advantage of simplicity and reduced size and cost.

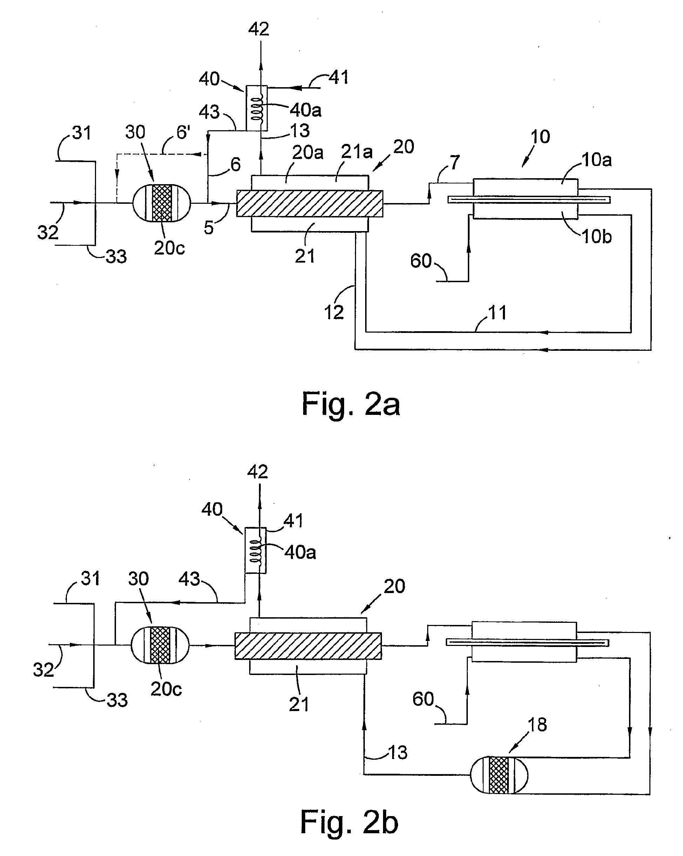

In the second embodiment of Figure 2a there is provided a fuel cell stack 10 having anode 10a and cathode 10b sides, a steam reformer (SR) 20, a CPOX reformer 30 configured to act as an autothermal ATR reformer via the provision of an optional water supply to give some steam reforming. A steam generator 40 is associated with the SR 20. At start-up of the process, the steam reformer 20, CPOX reformer (configured as an ATR reformer) 30 and steam generator 40 are cold i.e. below their normal operating temperature.

The CPOX reformer 30 is supplied with hydrocarbon fuel, and air along respective lines 32 and 33 and in this mode as supplied with these inputs acts as a CPOX reformer (there being no steam reforming). This is advantageous in that the dry gas produced will not cause condensation in the steam reformer 20 or fuel cell stack 10 when they are cold. To avoid potential problems with carbon formation (coking) it is desirable to add water (via line 31) so that the CPOX reformer 30 acts as an ATR reformer, the added water providing some steam reforming, and this is done once the steam reformer 20 and fuel cell stack 10 are hot enough to avoid condensation. The reformate from the CPOX reformer 30, a gas containing hydrogen, passes via line 5 through the steam reformer 20 and via a line 7 to the fuel cell stack anode side 10a. The steam reforming catalyst is inactive initially (as it is below its reforming operating temperature) - though it may act as a water gas shift (WGS) reactor due to the effect of its catalyst at these temperatures. This will to some extent reduce carbon monoxide levels in the gas entering the fuel cell stack. At this point, the fuel cell stack 10 is cold and inactive though it does receive some heat from the reformate gas containing hydrogen. The latter passes through initially unreacted via a line 12 to a burner integral with the heat exchange side 21 of steam reformer 20 where it burns spontaneously assisted by a burner catalyst 21a in a supply of air supplied by a line 11 from the cathode side 10b of the fuel cell stack 10. This combustion heats up the steam reformer 20 and when this and the fuel cell stack 10 and the associated lines are at operating temperature (and above condensation temperatures), the supply of air to the CPOX/ATR reformer 30 is shut down, and the steam reformer 20 starts up by feeding water and/or steam. In this way the SR 20 assumes the full steam reforming function, for high efficiency steady fuel supply.

Thus at cold the CPOX/ATR reformer 30 is used to heat the SR 20 rapidly to bring the process up to operating temperature, when the SR 20 takes over with a higher efficiency.

The fuel cell stack 10 once in operation produces otherwise waste heat which is used by the SR 20 to continue its endothermic reforming reaction. Heat from the heat exchanger 21 side of the SR 20 is fed to a heat exchanger 40a of the steam generator 40, the steam produced feeding the SR 20 after (and optionally before) the CPOX/ATR reformer 30 is shut off, via a line 6. The line 6 in this and other embodiments hereinafter described may feed the CPOX/ATR reformer 30 as shown in broken line as 6' as shown in the third embodiment.

It will be apparent that the CPOX/ATR refonner 30 could be brought quickly on line should the fuel cell stack 10 experience a sudden need for extra fuel (due to increased transient load, for example).

Similarly, because SR 20 is not capable of functioning at reduced (low level) fuel supply rates, and at shutdown of the fuel cell stack 10 (and shutdown of the supply of fuel to it) it is desirable to supply a blanket gas reducing atmosphere as the fuel cell stack 10 cools down, it will be apparent that switching the supply to the fuel cells of reformed hydrocarbon fuel from the SR 20 to a supply derived from a CPOX reformer 30 to allow a low fuel feed rate and thus a high oxygen to carbon ratio to create a supply to the fuel cells containing mostly nitrogen with a low percentage of carbon monoxide and hydrogen.

The CPOX reformer 30 may be supplied with water/steam to allow some autothermal reforming whether at start-up, during supply to meet transient increases, or at shutdown.

The content of the foregoing three paragraphs is applicable to other embodiments as it is to this second embodiment.

In the third embodiment shown in Figure 2b, the process is closely similar to that of the second embodiment except that there is provided a tail gas burner 18 which is separate from the steam reformer 20 heat exchange side 21 (i.e. with a burner arrangement similar to that of the first embodiment).

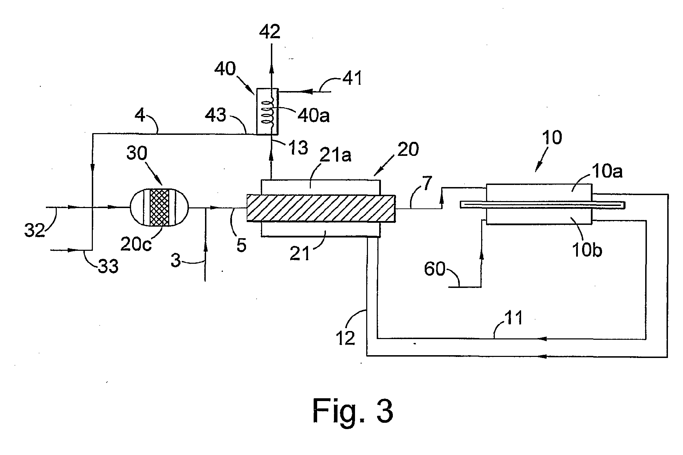

In the fourth embodiment shown in Figure 3, the process is very similar to that of the third embodiment and the same reference numerals have been used to represent similar parts. The exception is that there is no water supply 31 to the CPOX reformer 30, which thus does not act as an ATR reformer during system start-up. However, some steam reforming is controllably provided by water which can be injected into the reformate stream from the CPOX reformer 30 via line 3 so that it is added before passing through to the SR 20 (and also before passing to the fuel cell stack 10), this water being evaporated by the reaction heat from the CPOX reaction. In this embodiment there is provision for steam injection from the steam generator 40 via line 4 to avoid potential coking on the hot CPOX catalyst when the air supply is removed during the shift to pure SR operation and shutting down of the CPOX reformer 30.

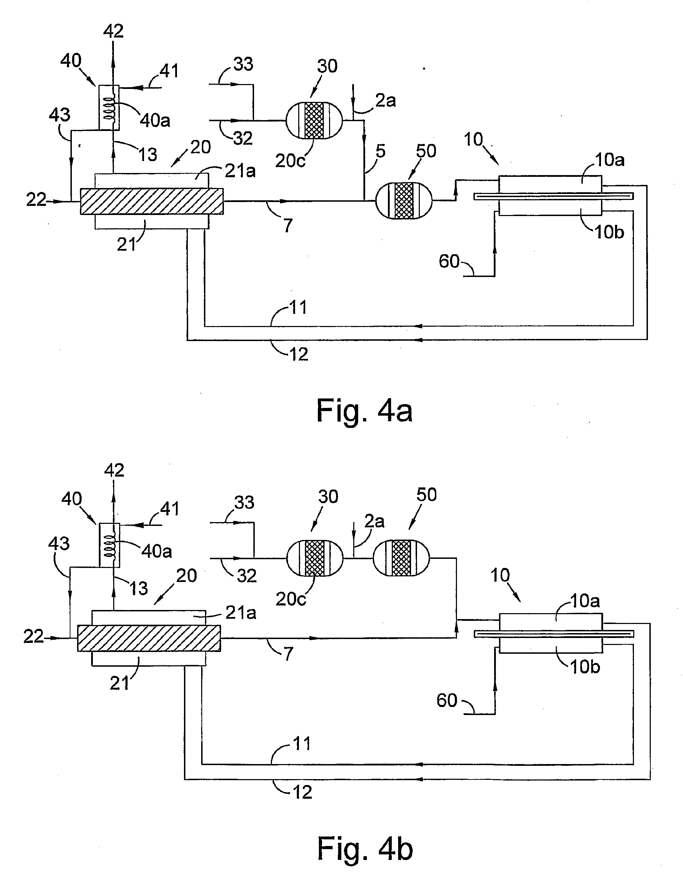

In the fifth embodiment shown in Figure 4a, the process is arranged differently. The CPOX reformer 30 and the SR 20 are not in-line (series) as in the case in the second to fourth embodiments, but are in parallel. The same reference numerals have been used to identify corresponding parts. In this embodiment, the gas containing hydrogen does not pass from the CPOX reformer 30 through the SR 20 and on to the fuel cell stack 10 but passes directly from the CPOX reformer 30 to a separate WGS (water gas shift) reactor 50 and thence to the fuel cell stack 10. In this embodiment, the SR 20 and CPOX reformer 30 each have a separate hydrocarbon fuel supply 22, 32 respectively. Some water gas shift reaction is provided by the injection of water into the reformate via line 2a from the CPOX reformer 30 before being supplied to the WGS reactor 50. This system is advantageous if there were to be a problem with the feeding of CPOX reformate to the SR 20 during start-up (or shut-down), and thus during start-up no gas is passed over the steam reforming catalyst until the steam generator 40 is hot enough to be started, after which the steam reforming catalyst can be purged with steam from the steam generator 40 before switching from CPOX to SR operation. The advantage of a separate WGS reactor 50 is that it can be utilised to treat the CPOX reformate and subsequently the SR reformate, for example if the CO level needs to be reduced below that normally achievable by SR reformation alone.

In the sixth embodiment of Figure 4b, the WGS reactor 50 is not in-line with the SR 20 but in parallel to it, and in-line only with the CPOX reformer 30 which is also in parallel to the SR 20. This is advantageous where the fuel cell stack 10 is CO tolerant, enabling the SR 20 to supply the fuel cell stack 10 direct, the CPOX reformer 30 and WGS reactor 50 being for start-up with the SR 20 adding only a few per cent of advantage to the hydrogen level in the gas stream.

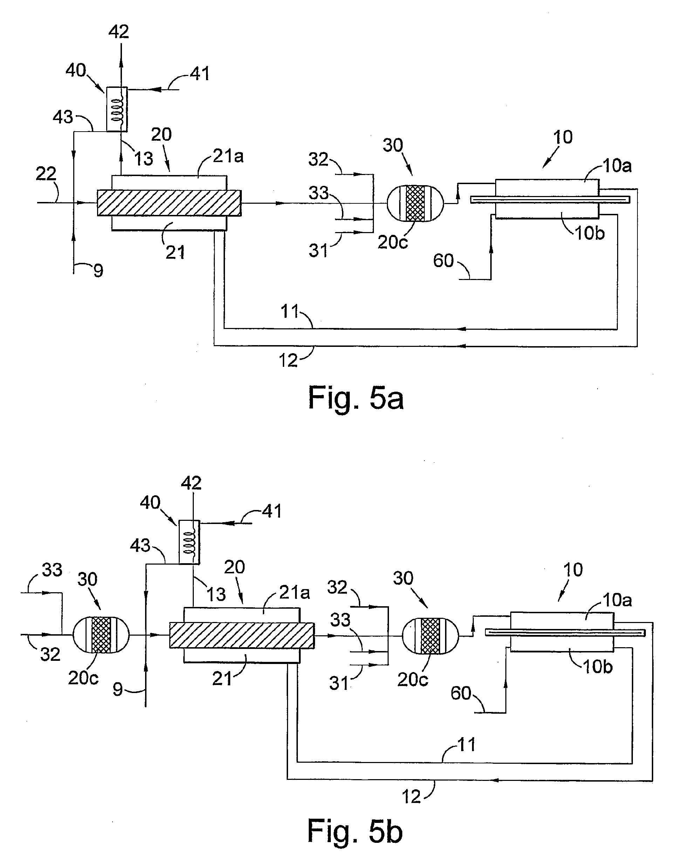

In the seventh embodiment of Figure 5a, the arrangement is again an in-line one (as in the first and second embodiments) except that the steam reformer 20 is "upstream" of the CPOX reformer 30 (which, supplied with water, acts as an ATR reformer) but in exactly the opposite configuration of the first and second embodiments. Again, the same numerals have been used to identify corresponding parts. The CPOX reformer 30 and SR 20 have separate fuel supplies 22, 32 respectively. The CPOX reformer 30 catalyst, when the CPOX reformer 30 is shut down, after the SR 20 has been started up, may have some activity as a WGS reactor for the steam reformer 20, to cut down carbon monoxide content and enhance hydrogen content.

In this embodiment, there is an optional air supply via line 9, which allows any deposited carbon or sulphur on the steam reforming catalyst to be oxidised, and so burnt off, during start-up thus regenerating the steam reforming catalyst.

In the eighth embodiment of Figure 5b, the arrangement is similar to that of Figure 5a but with the addition of a CPOX reformer 30 in-line with and preceding (upstream) of the SR 20, with a steam injection point (line 43) between the CPOX reformer 30 and the SR 20. The CPOX reformer 30 is supplied with fuel and air in the usual way through lines 32a and 33a respectively. In this arrangement, the CPOX reformer 30 is used to get the fuel cell stack 10 up to operating temperature using the CPOX reformer 30 and then reduce the air to off and run the SR 20 normally after operational temperature of the fuel cell 10 stack has been achieved.

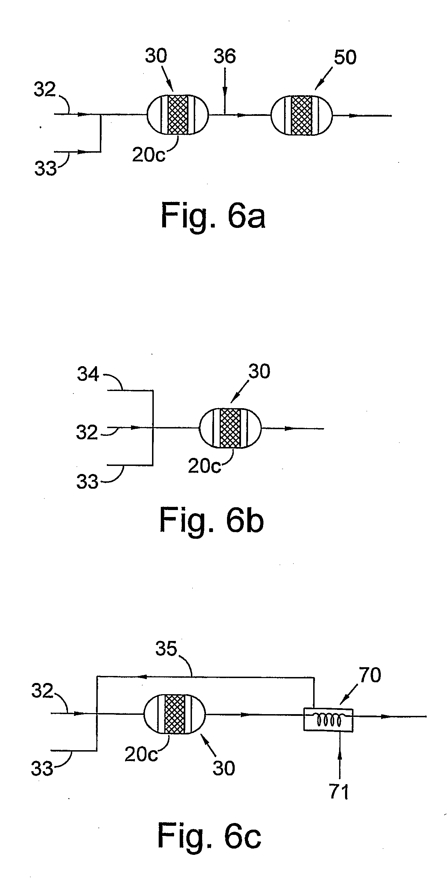

Figures 6a, 6b and 6c show variations on the arrangement of the partial oxidation reformer (CPOX)/ autothermal reformer (ATR) 30.

In Figure 6a an ATR is provided in two stages, with a dry CPOX reformer 30 generating a high temperature gas stream which can then be used as a source of heat to evaporate water injected into it via water supply line 36, before the resulting humidified mixture is fed to a WGS reactor 50 to convert much of the carbon monoxide and water to carbon dioxide and hydrogen.

In Figure 6b the CPOX reformer 30 is monolithic or arranged as a pebble bed or as coated reformer structures with an external steam supply 34 from the main steam generator 40, so it can only act as ATR when the main steam generator 40 is at operating temperature.

In Figure 6c downstream of the CPOX reformer 30 there is a secondary steam generator 70 (having a water supply line 71), which is heated by the hot reformate stream. The resulting steam is fed back via line 35 to the CPOX reformer 30. In this arrangement the CPOX reformer 30 needs to be started dry as a CPOX reformer until sufficient heat is generated to raise steam, after which it is supplied with water to then run as an ATR proper, i.e. with some steam reforming. Alternatively, an auxiliary heat source may be used to enable steam to be generated from cold.

It will be appreciated that the variants shown in Figures 6a to 6c can be used as appropriate in the foregoing embodiments 2 to 6.

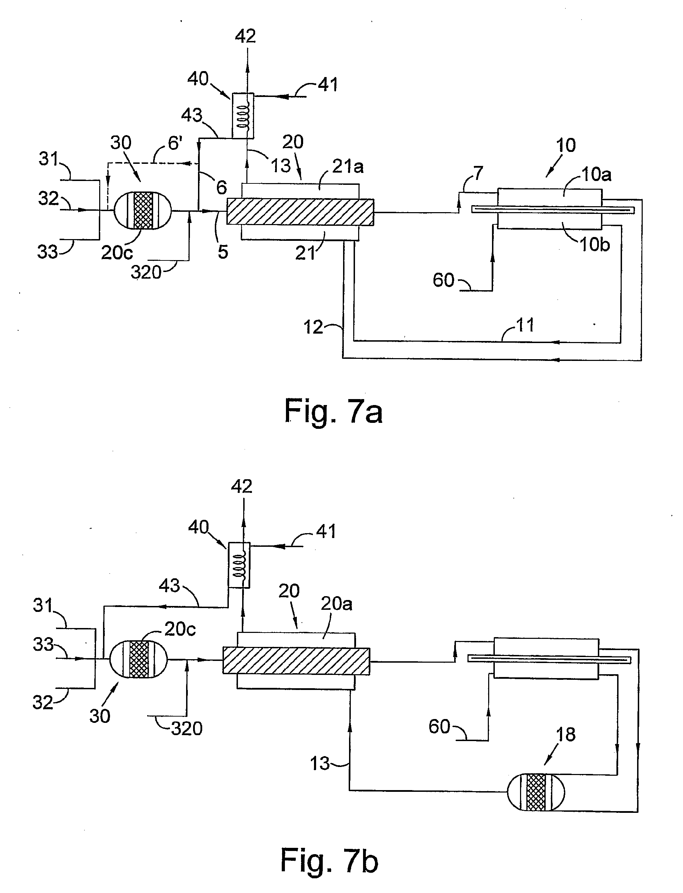

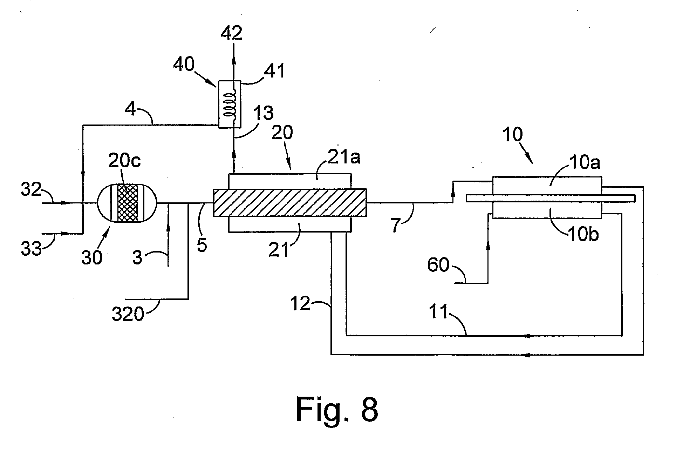

In the embodiments shown in Figures 7a, 7b and 8, an additional fuel supply feed (320) is provided, bypassing the first reformer section and feeding to the steam reformer unit 20 such that, once in operation, if required the steam reformer 20 can be operated independently of the CPOX reformer 30. Such circumstances include maintenance of the CPOX reformer, allowing a small CPOX/ATR reformer to be used for system start-up before converting to a larger steam reformer for continued operation, or for instances where it is undesirable to flow hydrocarbon fuel through the CPOX reformer - such as to prevent coking of the reformer when a steam or water supply is not available, such as during system cool down.

Whilst the foregoing description, with reference to the drawings, has been made in order to describe the invention, i.e. a method of reforming hydrocarbon fuel for supply to a fuel cell stack at start-up, it will be readily apparent that, in relation to the second to the eighth embodiments, the CPOX/ATR could be quickly brought on line to provide additional fuel quickly in accordance with the requirements of transient increased loads experienced by the fuel cell stack, in accordance with the second aspect, that is, a method of supplying reformed hydrocarbon fuel for fuel cells comprising supplying the fuel cells with hydrocarbon fuel reformed by a steam reformer, and for rapid load transients of the fuel cells when an increase in fuel is required quickly, using a CPOX reformer to supply extra reformed fuel.

Also, it will be apparent in relation to the second to the eighth embodiments that the start-up methods described are applicable in reverse as shut down procedures, in accordance with the third aspect, that is, a method of shutting down a supply of reformed hydrocarbon fuel for a fuel cell comprising supplying the fuel cells with hydrocarbon fuel reformed by a steam reformer, and when it is desired to shut down the fuel cell, switching the supply to the fuel cells of reformed hydrocarbon fuel derived from a CPOX reformer to allow a low fuel feed rate at a high oxygen to carbon ratio to create a supply to the fuel cells containing mostly nitrogen with a low percentage of carbon monoxide and hydrogen.

The CPOX reformer may be supplied with water/steam to allow some autothermal reforming. This provides an inert or reducing blanket gas atmosphere on the anode side of the fuel cells and is maintained until the fuel cells have cooled sufficiently that it is safe to admit air to the fuel cells. The advantage of operating in this way is that the CPOX reformer can be turned down further that the steam reformer such that only a small fuel flow is required to maintain the reducing atmosphere. This reduces the fuel consumption, protects the fuel cell anode and speeds up shutdown.

It will be appreciated that various arrangements of the system will be apparent to the competent person skilled in the art without departing from the invention as defined in the appended claims.

Clearly, the sub-stoichiometric supply of oxygen may be supplied by any oxygen-containing gas including pure oxygen, but the usual means of supplying oxygen will be by a supply of air.

Reference numerals:
1 - hydrocarbon fuel line
2 - air line
2a - water supply line
3 - Hydrocarbon fuel line
4 - Steam line
5 - CPOX / ATR reformate line
6 - Steam line
6' - Optional steam line
7 - Steam reformer reformate line
9 - air supply line
10 - fuel cell stack
10a - fuel cell stack anode side
10b - fuel cell stack cathode side
11 - Cathode off-gas line
12 - Anode off-gas line
13 - Gas burner exhaust line
18 - gas burner
18a - burner catalyst/flame burner
20 - steam reformer (SR)
20a - heater section
20b - steam reformer catalyst section
20c - cartridge heater
21 - heat exchange side
21 a - burner catalyst
22 - hydrocarbon fuel supply line
30 - CPOX / autothermal ATR reformer
31- water supply line
32 - hydrocarbon fuel supply line
32a - hydrocarbon fuel supply line
33 - air supply line
33a - air supply line
34 - steam supply line
35 - steam supply line
36 - water supply line
40 - steam generator
40a - steam generator heat exchanger
41 - water inlet
42 - feed to exhaust
43 - steam outlet feed
50 - WGS reactor
60 - air feed
70 - secondary steam generator
71 - water supply line

## Claims

1. A method of reforming hydrocarbon fuel for supply at start-up to a solid oxide fuel cell stack comprising at least one fuel cell, the method comprising:
supplying a steam reformer (SR) defining a catalytic chamber in which is contained a catalyst, with said hydrocarbon fuel and a sub-stoichiometric amount of oxygen by an oxygen-containing gas, to carry out a partial oxidation (CPOX reaction) of said hydrocarbon fuel on said SR catalyst to produce a gas containing hydrogen,
supplying said gas containing hydrogen to the anode side of said fuel cell stack where it is initially un-reacted in the cold fuel cell stack but giving up some of its heat thereto, and thence to a burner where said gas containing hydrogen is burnt in a supply of oxygen-containing gas: using the hot gas produced to heat up said SR to operating temperature, whereupon
when said SR and fuel cell stack is up to operating temperature, shutting off said supply of oxygen-containing gas to said SR and supplying it with water and/or steam to produce an hydrogen-rich fuel, and supplying said hydrogen-rich fuel to the anode side of said fuel cell stack,
and in which said supply of oxygen-containing gas to said burner is supplied from the cathode side of said fuel cell stack.

2. A method of reforming hydrocarbon fuel for supply to a solid oxide fuel cell stack at start-up as claimed in claim 1, in which waste heat from said fuel cell stack is supplied to said SR to maintain said SR's operating temperature.

3. A method of reforming hydrocarbon fuel for supply to a solid oxide fuel cell stack at start-up as claimed in claim 1 or 2, in which there is provided a supplementary means of heating said SR catalyst at start-up to assist it in achieving SR catalyst operating temperature.

4. A method of reforming hydrocarbon for supply to a solid oxide fuel cell stack at start-up as claimed in any preceding claim, in which, before said gas containing hydrogen is supplied to said fuel stack, water and/or steam is mixed with it to provide partial steam reforming of the hydrocarbon fuel, and thus to shift carbon monoxide and water/steam to carbon dioxide and hydrogen.

5. A method of reforming hydrocarbon fuel for supply to a solid oxide fuel cell stack at start-up as claimed in any of claims 2-4, in which said gas containing hydrogen is, before being supplied to said fuel cell stack, passed through said catalytic chamber of said steam reformer.

6. A method of reforming hydrocarbon fuel for supply to a solid oxide fuel cell stack at start-up as claimed in any of claims 1-5, in which said SR defines a heat exchange side, and gas effluent from said heat exchange side of said SR is used to heat a steam generator for the production of steam supplied to said SR and used in steam reforming.

7. A method of reforming hydrocarbon fuel for supply to a solid oxide fuel cell stack at start-up as claimed in any preceding claim, in which said burner is integrated into said steam reformer.

## Patentansprüche

1. Verfahren des Reformierens von Kohlenwasserstoffbrennstoff zum Speisen, beim Anlassen, von Festkörperoxid zu einem Brennstoffzellenstapel, der mindestens eine Brennstoffzelle umfasst, das Verfahren umfassend:
Speisen eines Dampfreformers (SR), der eine Katalysekammer definiert, in der ein Katalysator enthalten ist, mit dem Kohlenwasserstoffbrennstoff und einer unterstöchiometrischen Menge Sauerstoff durch ein Sauerstoff enthaltendes Gas, um eine partielle Oxidation (CPOX) des Kohlenwasserstoffbrennstoffs an dem SR-Katalysator durchzuführen, um ein Gas, das Wasserstoff enthält, zu produzieren,
Speisen des Gases, das Wasserstoff enthält, zu einer Anodenseite des Brennstoffzellenstapels, wo es anfangs in dem kalten Brennstoffzellenstapel nicht umgesetzt wird, aber einiges seiner Wärme dorthin abgibt, und von dort zu einem Brenner, wo das Gas, das Wasserstoff enthält, in einer Speisung von Sauerstoff enthaltendem Gas verbrannt wird; Verwenden des produzierten warmen Gases zum Aufwärmen des SR auf Betriebstemperatur, daraufhin
wenn der SR und Brennstoffzellenstapel Betriebstemperatur erreicht haben, Abstellen der Speisung von Sauerstoff enthaltendem Gas zu dem SR und Speisen dessen mit Wasser und/oder Dampf, um einen Wasserstoff-reichen Brennstoff zu produzieren, und Speisen des Wasserstoff-reichen Brennstoffs zu der Anodenseite des Brennstoffzellenstapels,
und wobei die Speisung des Sauerstoff enthaltenden Gases zu dem Brenner von der Kathodenseite des Brennstoffzellenstapels gespeist wird.

2. Verfahren des Reformierens von Kohlenwasserstoffbrennstoff zum Speisen zu einem Festkörperoxid-Brennstoffzellenstapel beim Anlassen nach Anspruch 1, wobei Abwärme von dem Brennstoffzellenstapel zu dem SR gespeist wird, um die Betriebstemperatur des SR aufrechtzuerhalten.

3. Verfahren des Reformierens von Kohlenwasserstoffbrennstoff zum Speisen zu einem Festkörperoxid-Brennstoffzellenstapel beim Anlassen nach Anspruch 1 oder 2, wobei ein zusätzliches Mittel zum Wärmen des SR-Katalysators beim Anlassen bereitgestellt wird, um ihn beim Erreichen der SR-Katalysator-Betriebstemperatur zu unterstützen.

4. Verfahren des Reformierens von Kohlenwasserstoffbrennstoff zum Speisen zu einem Festkörperoxid-Brennstoffzellenstapel beim Anlassen nach einem der vorstehenden Ansprüche, wobei, bevor das Gas, das Wasserstoff enthält, zu dem Brennstoffzellenstapel gespeist wird, Wasser und/oder Dampf damit gemischt wird, um partielles Dampfreformieren des Kohlenwasserstoffbrennstoffs bereitzustellen und somit Kohlenmonoxid und Wasser/Dampf zu Kohlendioxid und Wasserstoff zu konvertieren.

5. Verfahren des Reformierens von Kohlenwasserstoffbrennstoff zum Speisen zu einem Festkörperoxid-Brennstoffzellenstapel beim Anlassen nach einem der Ansprüche 2-4, wobei das Gas, das Wasserstoff enthält, bevor es zu dem Brennstoffzellenstapel gespeist wird, durch die Katalysekammer des Dampfreformers geführt wird.

6. Verfahren des Reformierens von Kohlenwasserstoffbrennstoff zum Speisen zu einem Festkörperoxid-Brennstoffzellenstapel beim Anlassen nach einem der Ansprüche 1 bis 5, wobei der SR eine Wärmeaustauschseite definiert und aus der Wärmeaustauschseite des SR ausströmendes Gas verwendet wird, um einen Dampfgenerator zum Produzieren von Dampf, der zu dem SR gespeist und beim Dampfreformieren verwendet wird, zu erwärmen.

7. Verfahren des Reformierens von Kohlenwasserstoffbrennstoff zum Speisen zu einem Festkörperoxid-Brennstoffzellenstapel beim Anlassen nach einem der vorstehenden Ansprüche, wobei der Brenner in dem Dampfreformer integriert ist.

## Revendications

1. Procédé de reformage d'un combustible hydrocarboné pour l'introduction au démarrage dans un empilement de piles à combustible à oxyde solide comprenant au moins une pile à combustible, le procédé comprenant :
- l'introduction, dans un reformeur à vapeur (RV) définissant une chambre catalytique qui renferme un catalyseur, dudit combustible hydrocarboné et d'une quantité sub-stoechiométrique d'oxygène à l'aide d'un gaz contenant de l'oxygène, pour réaliser une oxydation partielle (réaction CPOX) dudit combustible hydrocarboné sur ledit catalyseur du RV pour produire un gaz contenant de l'hydrogène,
- l'introduction dudit gaz contenant de l'hydrogène côté anode dudit empilement de piles à combustible où initialement il ne réagit pas dans l'empilement de piles à combustible froid mais où il libère une partie de sa chaleur, et de là dans un brûleur où ledit gaz contenant de l'hydrogène subit une combustion dans une atmosphère de gaz contenant de l'oxygène ; l'utilisation du gaz chaud produit pour chauffer ledit RV à la température de fonctionnement, moyennant quoi
lorsque ledit RV et ledit empilement de piles à combustible ont atteint la température de fonctionnement, on arrête ladite introduction de gaz contenant de l'oxygène dans ledit RV et on y introduit de l'eau et/ou de la vapeur pour produire un combustible riche en hydrogène, et on introduit ledit combustible riche en hydrogène côté anode dudit empilement de piles à combustible,
et dans lequel ladite introduction de gaz contenant de l'oxygène dans ledit brûleur s'effectue côté cathode dudit empilement de piles à combustible.

2. Procédé de reformage d'un combustible hydrocarboné pour l'introduction dans un empilement de piles à combustible à oxyde solide au démarrage selon la revendication 1, dans lequel la chaleur résiduelle provenant dudit empilement de piles à combustible est introduite dans ledit RV pour maintenir la température de fonctionnement dudit RV.

3. Procédé de reformage d'un combustible hydrocarboné pour l'introduction dans un empilement de piles à combustible à oxyde solide au démarrage selon la revendication 1 ou 2, qui est doté de moyens supplémentaires de chauffage dudit catalyseur du RV au démarrage pour l'aider à atteindre la température de fonctionnement du catalyseur du RV.

4. Procédé de reformage d'un combustible hydrocarboné pour l'introduction dans un empilement de piles à combustible à oxyde solide au démarrage selon l'une quelconque des revendications précédentes, dans lequel, avant que ledit gaz contenant de l'hydrogène soit introduit dans ledit empilement de piles à combustible, de l'eau et/ou de la vapeur sont mélangées avec lui pour effectuer un reformage partiel à la vapeur du combustible hydrocarboné, et ainsi convertir le monoxyde de carbone et l'eau/vapeur en dioxyde de carbone et en hydrogène.

5. Procédé de reformage d'un combustible hydrocarboné pour l'introduction dans un empilement de piles à combustible à oxyde solide au démarrage selon l'une quelconque des revendications 2 à 4, dans lequel ledit gaz contenant de l'hydrogène, avant d'être introduit dans ledit empilement de piles à combustible, traverse ladite chambre catalytique dudit reformeur à vapeur.

6. Procédé de reformage d'un combustible hydrocarboné pour l'introduction dans un empilement de piles à combustible à oxyde solide au démarrage selon l'une quelconque des revendications 1 à 5, dans lequel ledit RV définit un côté échange de chaleur, et l'effluent gazeux provenant dudit côté échange de chaleur dudit RV est utilisé pour chauffer un générateur de vapeur pour la production de la vapeur introduite dans ledit RV et utilisée dans le reformage à la vapeur.

7. Procédé de reformage d'un combustible hydrocarboné pour l'introduction dans un empilement de piles à combustible à oxyde solide au démarrage selon l'une quelconque des revendications précédentes, dans lequel ledit brûleur est intégré audit reformeur à vapeur.
